# EUROPEAN PATENT APPLICATION

(11) **EP 4 819 717 A1**
(43) Date of publication of application: **07.10.2026**
(21) Application number: 24916774.3
(22) Date of filing: 27.12.2024
(51) Int. Cl.: H04W 72/044

(54) **COMMUNICATION METHOD AND COMMUNICATION APPARATUS**

(30) Priority: 10.01.2024 CN 202410041765
(71) Applicant: Huawei Technologies Co., Ltd., Shenzhen, Guangdong 518129 (CN)
(72) Inventor: KONG, Chuili, Shenzhen, Guangdong 518129 (CN); WANG, Xiaolu, Shenzhen, Guangdong 518129 (CN); WANG, Jun, Shenzhen, Guangdong 518129 (CN)
(74) Representative: Thun, Clemens
(86) International application number: PCT/CN2024/143365
(87) International publication number: WO 2025/148727

(57) **Abstract**

A communication method and a communication apparatus are provided. The method includes: A terminal device obtains ephemeris information, and the terminal device adjusts a direction of a receive beam and a direction of a transmit beam based on the ephemeris information. In this application, the direction of the receive beam and the direction of the transmit beam may be adjusted based on the ephemeris information, so that frequent indication of a beam direction by using a TCI can be avoided, thereby reducing signaling overheads.

## Description

This application claims priority to Chinese Patent Application No. 202410041765.3, filed with the China National Intellectual Property Administration on January 10, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, 5th generation (5th generation, 5G) new radio (new radio, NR) is designed and researched for characteristics of terrestrial communication, and is characterized by providing high-rate, high-reliability, and low-latency communication for user terminals. Compared with terrestrial communication, non-terrestrial network (non-terrestrial network, NTN) communication is characterized by large coverage and flexible networking.

Beam management may refer to the management of scanning, reporting, and maintenance of static beams, to select appropriate static beams for each channel. It enhances cell coverage and reduces system overheads. For an NR system, beam indication may be performed based on a transmission configuration indicator (transmission configuration indicator, TCI). Specifically, when performing beam indication, a network device may configure a TCI state (TCI state) to indicate a quasi co-location (quasi co-location, QCL) relationship with a reference signal; and a terminal device receives a beam direction, and trains a receive beam of the reference signal based on measurement of the reference signal. In this way, when receiving data of a target reference signal/channel, the terminal device may adjust a direction of the receive beam based on the QCL relationship with the reference signal.

In NTN communication, frequent indication of a beam direction by using a TCI causes high signaling overheads as a satellite moves dynamically. Therefore, how to reduce overheads for a beam direction in an NTN communication system is an urgent problem to be resolved.

### SUMMARY

Embodiments of this application provide a communication method and a communication apparatus. In embodiments of this application, a terminal device may adjust a direction of a receive beam and a direction of a transmit beam based on ephemeris information of a network device, and the network device may adjust the direction of the receive beam and the direction of the transmit beam based on location information of the terminal device, so that frequent indication of a beam direction by using a TCI can be avoided, thereby reducing signaling overheads.

According to a first aspect, an embodiment of this application provides a communication method. The method may be performed by a terminal device, may be performed by a module (for example, a processor, a chip, or a chip system) used in the terminal device, or may be implemented by a logical node, a logical module, or software that can implement all or some functions of the terminal device. The method may include: obtaining ephemeris information; and adjusting a direction of a receive beam and a direction of a transmit beam based on the ephemeris information.

In the solution provided in this application, highly simplified NTN beam management is provided. NTN beam management is reconstructed based on location assistance information such as the ephemeris information. In other words, in this embodiment, location assistance information-based beam management is used, so that frequent indication of a beam direction by using a TCI can be avoided, thereby reducing signaling overheads.

In a possible implementation, the method may further include: obtaining a reference signal received power (reference signal received power, RSRP) threshold; and measuring the receive beam when an RSRP of the terminal device is less than the RSRP threshold. In this possible implementation, the terminal device dominates beam measurement. Specifically, the terminal device may not perform periodic beam measurement or reporting, and requests beam training only when a channel condition is poor or the terminal device determines that receive beam training is required, to reduce beam measurement or reporting overheads.

In a possible implementation, the method may further include: obtaining a preset duration; and measuring the receive beam when the RSRP of the terminal device remains below the RSRP threshold for the preset duration. In this possible implementation, the terminal device dominates beam measurement. Specifically, the terminal device may not perform periodic beam measurement or reporting, and requests beam training only when a channel condition is poor or the terminal device determines that receive beam training is required, to reduce beam measurement or reporting overheads.

In a possible implementation, the method may further include: sending request information, where the request information is used to request receive beam training, and the request information includes a time period requested for training; receiving a reference signal resource configured by a network device; and performing beam training based on the reference signal resource. In this possible implementation, the terminal device can dominate beam training time, so that the network device configures the reference signal resource for the terminal device based on the request information of the terminal device, and the terminal device performs beam training based on the reference signal resource, to reduce beam measurement or reporting overheads.

In a possible implementation, the request information further includes a quantity of beams requested for training. In this possible implementation, the terminal device can dominate a quantity of to-be-trained beams, so that the network device configures the reference signal resource for the terminal device based on the request information of the terminal device, and the terminal device performs beam training based on the reference signal resource, to reduce beam measurement or reporting overheads.

In a possible implementation, the obtaining the ephemeris information includes: obtaining transmission configuration indicator (transmission configuration indicator, TCI) state (state) information, where the TCI state information includes the ephemeris information. In this possible implementation, the ephemeris information is added to the TCI state information, so that the terminal device can be indicated to obtain a beam in advance during intra-satellite beam switching and inter-satellite switching, to resolve a problem of high signaling overheads caused by frequent TCI updates.

In a possible implementation, if the TCI state information includes the ephemeris information and no quasi co-location QCL typeD is configured, the direction of the receive beam is determined based on the ephemeris information. In this possible implementation, in a possible implementation, if the ephemeris information is added to the TCI state information, the network device may also configure the QCL typeD in the TCI state information. When receiving the TCI state information, the terminal device may be unable to determine an indication used to adjust the receive beam. In this embodiment, a problem of a conflict between the QCL typeD and the ephemeris information can be resolved.

In a possible implementation, if the TCI state information includes the ephemeris information and a quasi co-location QCL typeD is configured, the direction of the receive beam is determined based on an indication of the QCL typeD. In this possible implementation, in a possible implementation, if the ephemeris information is added to the TCI state information, the network device may also configure the QCL typeD in the TCI state information. When receiving the TCI state information, the terminal device may be unable to determine an indication used to adjust the receive beam. In this embodiment, a problem of a conflict between the QCL typeD and an ephemeris information can be resolved.

In a possible implementation, the TCI state information is carried in radio resource control (radio resource control, RRC), a medium access control control element (medium access control control element, MAC CE), or downlink control information (downlink control information, DCI).

In a possible implementation, the ephemeris information is ephemeris information of a cell currently serving the terminal device, or the ephemeris information is ephemeris information of a target cell.

In a possible implementation, the method may further include: sending location information of the terminal device, where the location information is used by the network device to adjust a beam direction, and the location information includes global navigation satellite system (global navigation satellite system, GNSS) information or beam position information.

According to a second aspect, an embodiment of this application provides a communication method. The method may be performed by a terminal device, may be performed by a module (for example, a processor, a chip, or a chip system) used in the terminal device, or may be implemented by a logical node, a logical module, or software that can implement all or some functions of the terminal device. The method may include: receiving a first QCL type, where the first QCL type meets at least one of the following conditions: there is no source reference signal; it indicates that the terminal device uses a same beam for downlink transmission and uplink transmission; and it indicates that a direction of a receive beam and a direction of a transmit beam of the terminal device are adjusted based on ephemeris information; and adjusting the direction of the receive beam based on the first QCL type.

In the solution provided in this application, a new QCL type (the first QCL type in this embodiment of this application) is defined, and the terminal device may adjust the direction of the receive beam based on the first QCL type and the ephemeris information, so that frequent indication of a beam direction by using a TCI can be avoided, thereby reducing signaling overheads.

In a possible implementation, the method may further include: obtaining the ephemeris information, where the ephemeris information is ephemeris information of a cell currently serving the terminal device, or the ephemeris information is ephemeris information of a target cell.

In a possible implementation, the receiving the first QCL type includes: receiving TCI state information, where the TCI state information includes the first QCL type.

In a possible implementation, the TCI state information further includes the ephemeris information.

In a possible implementation, the TCI state information is carried in RRC, MAC CE, or DCI.

According to a third aspect, this application provides a communication method. The method may be performed by a network device, may be performed by a module (for example, a processor, a chip, or a chip system) used in the network device, or may be implemented by a logical node, a logical module, or software that can implement all or some functions of the network device. The method may include: obtaining location information of a terminal device, where the location information includes GNSS information or beam position information; and adjusting a direction of a receive beam and a direction of a transmit beam based on the location information.

In the solution provided in this application, highly simplified NTN beam management is provided. NTN beam management is reconstructed based on location assistance information such as the GNSS information or the beam position information. In other words, in this embodiment, location assistance information-based beam management is used, so that frequent indication of a beam direction by using a TCI can be avoided, thereby reducing signaling overheads.

It should be understood that the third aspect may be performed by the network device. Specific content of the third aspect corresponds to the content of the first aspect. For corresponding features of the third aspect and beneficial effects achieved in the third aspect, refer to the descriptions of the first aspect. To avoid repetition, detailed descriptions are appropriately omitted herein.

In a possible implementation, the method may further include: sending an RSRP threshold, where the RSRP threshold is used by the terminal device to determine to measure the receive beam.

In a possible implementation, the method may further include: sending a preset duration, where the preset duration is used by the terminal device to determine to measure the receive beam.

In a possible implementation, the method may further include: receiving request information, where the request information is used to request receive beam training, and the request information includes a time period requested for training; and configuring a reference signal resource for the terminal device based on the request information.

In a possible implementation, the request information further includes a quantity of beams requested for training.

In a possible implementation, the method may further include: sending ephemeris information, where the ephemeris information is used by the terminal device to adjust the direction of the receive beam and the direction of the transmit beam.

In a possible implementation, the sending the ephemeris information includes: sending TCI state information, where the TCI state information includes the ephemeris information.

In a possible implementation, the reference signal resource is carried in RRC, MAC CE, or DCI; and/or the TCI state information is carried in RRC, MAC CE, or DCI.

In a possible implementation, the ephemeris information is ephemeris information of a cell currently serving the terminal device, or the ephemeris information is ephemeris information of a target cell.

According to a fourth aspect, this application provides a communication method. The method may be performed by a network device, may be performed by a module (for example, a processor, a chip, or a chip system) used in the network device, or may be implemented by a logical node, a logical module, or software that can implement all or some functions of the network device. The method may include: sending a first QCL type, where the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information.

In the solution provided in this application, a new QCL type (the first QCL type in this embodiment of this application) is defined, and the terminal device may adjust the direction of the receive beam based on the first QCL type and the ephemeris information, so that frequent indication of a beam direction by using a TCI can be avoided, thereby reducing signaling overheads.

It should be understood that the fourth aspect may be performed by the network device. Specific content of the fourth aspect corresponds to the content of the second aspect. For corresponding features of the fourth aspect and beneficial effects achieved in the fourth aspect, refer to the descriptions of the second aspect. To avoid repetition, detailed descriptions are appropriately omitted herein.

In a possible implementation, the method may further include: sending the ephemeris information, where the ephemeris information is ephemeris information of a cell currently serving the terminal device, or the ephemeris information is ephemeris information of a target cell.

In a possible implementation, the sending the first QCL type includes: sending TCI state information, where the TCI state information includes the first QCL type.

In a possible implementation, the TCI state information further includes the ephemeris information.

In a possible implementation, the TCI state information is carried in RRC, MAC CE, or DCI.

According to a fifth aspect, this application provides a communication apparatus. The communication apparatus includes modules/units configured to perform the method according to any one of the first aspect and the possible implementations of the first aspect, or the second aspect and the possible implementations of the second aspect. The apparatus may be a terminal device, may be a module (for example, a chip, a chip system, or a processor) used in the terminal device, or may be a logical node, a logical module, or software that can implement all or some functions of the terminal device.

According to a sixth aspect, this application provides a communication apparatus. The communication apparatus includes modules/units configured to perform the method according to any one of the third aspect and the possible implementations of the third aspect, or the fourth aspect and the possible implementations of the fourth aspect. The apparatus may be a network device, may be a module (for example, a chip, a chip system, or a processor) used in the network device, or may be a logical node, a logical module, or software that can implement all or some functions of the network device.

According to a seventh aspect, this application provides a communication apparatus. The apparatus may be a terminal device, may be a chip, a chip system, a processor, or the like that supports the terminal device in implementing the foregoing method, or may be a logical node, a logical module, or software that can implement all or some functions of the terminal device. The communication apparatus may alternatively be a chip system. The communication apparatus may perform the methods according to the first aspect and the second aspect. Functions of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the methods according to the first aspect and the second aspect and the beneficial effects thereof. Repeated parts are not described again.

According to an eighth aspect, this application provides a communication apparatus. The apparatus may be a network device, may be a chip, a chip system, a processor, or the like that supports the network device in implementing the foregoing method, or may be a logical node, a logical module, or software that can implement all or some functions of the network device. The communication apparatus may alternatively be a chip system. The communication apparatus may perform the methods according to the third aspect and the fourth aspect. Functions of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the methods according to the third aspect and the fourth aspect and the beneficial effects thereof. Repeated parts are not described again.

According to a ninth aspect, this application provides a computer-readable storage medium, where the computer-readable storage medium is configured to store computer-executable instructions, and when the computer-executable instructions are executed, the method performed by the terminal device in the method according to the first aspect or the second aspect is implemented, or the method performed by the network device in the method according to the third aspect or the fourth aspect is implemented.

According to a tenth aspect, this application provides a computer program product including a computer program. When the computer program is executed, the method performed by the terminal device in the method according to the first aspect or the second aspect is implemented, or the method performed by the network device in the method according to the third aspect or the fourth aspect is implemented.

According to an eleventh aspect, this application provides a communication system. The communication system includes a communication apparatus (for example, a terminal device) configured to perform the methods according to the first aspect and the second aspect and a communication apparatus (for example, a network device) configured to perform the method according to the third aspect and the fourth aspect.

### BRIEF DESCRIPTION OF DRAWINGS

FIG. 1 is a diagram of a non-terrestrial communication system according to an embodiment of this application;
FIG. 2 is a diagram of an architecture of a 5G satellite communication system according to an embodiment of this application;
FIG. 3 is a diagram of downlink transmit-end beam adjustment according to an embodiment of this application;
FIG. 4 is a diagram of downlink receive-end beam adjustment according to an embodiment of this application;
FIG. 5 is a diagram of interaction of a communication method according to an embodiment of this application;
FIG. 6 is a diagram of interaction of another communication method according to an embodiment of this application; and
FIG. 7 and FIG. 8 each are a diagram of a possible structure of a communication apparatus according to an embodiment of this application.

### DESCRIPTION OF EMBODIMENTS

The following further describes specific embodiments of this application in detail with reference to accompanying drawings.

The terms "first", "second", and the like in this specification, the claims, and the accompanying drawings of this application are used to distinguish between different objects, but are not used to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that specific features, structures, or characteristics described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, c, "a and b", "a and c", "b and c", or "a, b, and c", where a, b, and c may be singular or plural.

In this application, "sending information" may be understood as that a device sends information to another device, or may be understood as that a logical module in a device sends information to another logical module. For example, "a network device sends information" may be understood as that the network device sends information to another device (for example, a terminal device), or may be understood as that a logical module 1 in the network device sends information to a logical module 2 in the network device.

In this application, "receiving information" may be understood as that a device receives information from another device, or may be understood as that a logical module in a device receives information from another logical module. For example, "a network device receives information" may be understood as that the network device receives information from another device (for example, a terminal device), or may be understood as that a logical module 1 in the network device receives information from a logical module 2 in the network device.

In this application, "sending information to ... (for example, a terminal device)" may be understood as that a destination end of the information is the terminal device, and may include directly or indirectly sending the information to the terminal device. "Receiving information from ... (for example, a terminal device)" or "receiving information of ... (for example, a terminal device)" may be understood as that a source end of the information is the terminal device, and may include directly or indirectly receiving the information from the terminal device. Information may undergo necessary processing, for example, a format change, between a source end for sending the information and a destination end. However, the destination end may understand valid information from the source end. Similar expressions in this application may be understood similarly, and details are not described herein again.

To better understand embodiments of this application, the following first describes a system architecture in embodiments of this application.

Embodiments of this application may be applied to a communication system such as a satellite communication system, including a satellite base station, a terrestrial station, and a terminal device-type network element. The satellite base station provides a communication service for a terminal device. The satellite base station transmits downlink data to the terminal device. The data is encoded through channel coding, and data obtained through the channel coding is transmitted to the terminal device after constellation modulation. The terminal device transmits uplink data to the satellite base station. The uplink data may also be encoded through channel coding, and encoded data is transmitted to the satellite base station after constellation modulation. A wireless communication system may include one or more network devices and one or more terminal devices.

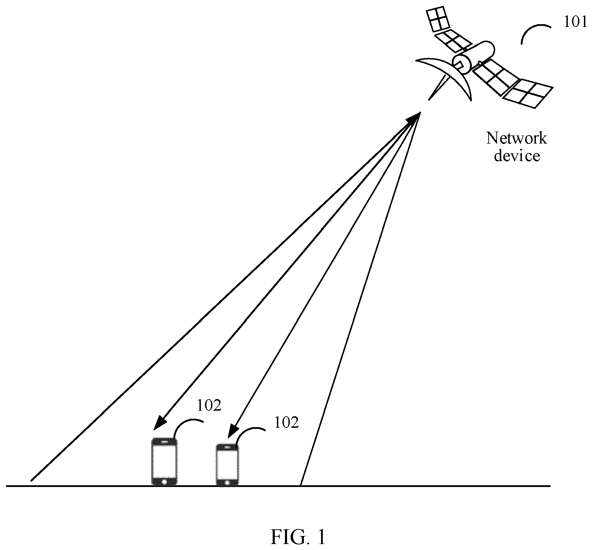

The following uses a system architecture shown in FIG. 1 as an example for description. A communication method provided in embodiments of this application is applicable to an NTN communication system. As shown in FIG. 1, the NTN communication system includes a network device 101 and terminal devices 102.

The terminal device 102 may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device is a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal device in industrial control, a smart home device (for example, a refrigerator, a television, an air conditioner, or an electricity meter), a smart robot, a robot arm, a workshop device, a wireless terminal device in self-driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. The terminal device may alternatively be another device that has a terminal device function. For example, the terminal device may alternatively be a device that implements a terminal device function in D2D communication.

A device form factor of the terminal device is not limited in embodiments of this application. An apparatus for implementing a function of a terminal device may be a terminal device, or may be an apparatus, for example, a chip system, that can support a terminal device in implementing the function. The apparatus may be mounted in a terminal device or used in conjunction with a terminal device. In embodiments of this application, the chip system may include a chip, or may include a chip and another discrete component.

The network device 101 may also be referred to as a satellite, a high-altitude platform, a high-altitude aircraft, or a satellite base station. The network device 101 provides a communication service for the terminal device 102, and the network device 101 may be further connected to a core network device. The network device is configured to help the terminal device implement wireless access.

In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a base station in a future mobile communication system, a satellite, an integrated access and backhaul (integrated access and backhaul, IAB) node, or a network device in a mobile switching center-based non-terrestrial network (non-terrestrial network, NTN) communication system, that is, the network device may be deployed on a high-altitude platform, a satellite, or the like. The network device may be a macro base station, a micro base station, an indoor station, a relay node, a donor node, or a radio controller in a CRAN scenario. The network device may alternatively be a device that implements a base station function in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, a network device in a vehicle-to-everything (vehicle-to-everything, V2X) technology may be a roadside unit (roadside unit, RSU).

All or some functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

In another possible scenario, a plurality of network devices collaborate to assist a terminal device in implementing wireless access, and different network devices separately implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

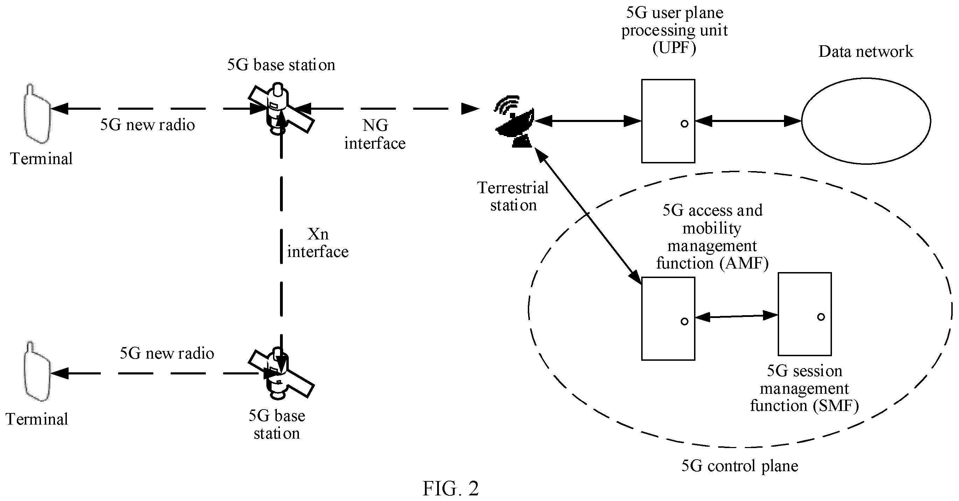

5G is used as an example. An architecture of a 5G satellite communication system is shown in FIG. 2. A terrestrial terminal device accesses a network through 5G new radio. A 5G base station is deployed on a satellite, and is connected to a terrestrial core network through a radio link. In addition, there is a radio link between satellites, to complete signaling interaction and user data transmission between base stations. Devices and interfaces in FIG. 2 are described as follows:
A 5G core network provides services such as user access control, mobility management, session management, user security authentication, and charging. The 5G core network includes a plurality of functional units, which may be divided into a control plane functional entity and a data plane functional entity. An access and mobility management unit function (access and mobility management function, AMF) is responsible for user access management, security authentication, and mobility management. A user plane function (user plane function, UPF) is responsible for functions such as managing user plane data transmission and traffic statistics. A session management function (session management function, SMF) is mainly configured for session management in a mobile network, for example, session establishment, modification, and release.

A terrestrial station is responsible for forwarding signaling and service data between a satellite base station and a 5G core network.

5G new radio is a radio link between a terminal device and a base station.

An Xn interface is an interface between a 5G base station and a base station, and is mainly configured for signaling interaction, for example, handover.

An NG interface is an interface between a 5G base station and a 5G core network, and is mainly configured for exchanging non-access stratum (non-access stratum, NAS) signaling or other signaling of the core network, and service data of a user.

A form factor of the network device is not limited in embodiments of this application. An apparatus for implementing a function of a network device may be a network device, or may be an apparatus, for example, a chip system, that can support a network device in implementing the function. The apparatus may be mounted in the network device or used in conjunction with the network device.

When the technical solutions provided in embodiments of this application are described below, an example in which the apparatus for implementing the function of the network device is a satellite is used to describe the technical solutions provided in embodiments of this application. It may be understood that, when the solutions provided in embodiments of this application is applied to, for example, a terrestrial network communication system, an action performed by the satellite may be performed by a base station or a network device. In addition, the satellite may be a geostationary satellite, a non-geostationary satellite, an artificial satellite, a low earth orbit satellite, a medium earth orbit satellite, a high earth orbit satellite, or the like. This is not specifically limited in embodiment of this application.

To facilitate understanding of content of the solutions, the following further explains and describes some terms in embodiments of this application, so as to facilitate understanding by persons skilled in the art. This part is merely for ease of understanding, and cannot be considered as a specific limitation on this application.

### 1. Quasi co-location

Large-scale properties of a channel over which a symbol on an antenna port is conveyed can be inferred from a channel over which a symbol on another antenna port is conveyed. That is, the quasi co-location indicates that two antenna ports have same large-scale properties.

### 2. Beam management

The core of beam management may be management of scanning, reporting, and maintenance of static beams, to select appropriate static beams for each channel. It enhances cell coverage and reduces system overheads.

For an NR system, beam management may include the following:
(1) Beam scanning: Spatial scanning is performed, at a predefined time interval, on beams used for sending reference signals.
(2) Beam measurement/determination: A terminal device measures the reference signals, and selects a best beam.
(3) Beam reporting: The terminal device reports a beam measurement result.
(4) Beam indication: A network device indicates the terminal device to select a specified beam.
(5) Beam failure recovery: The beam failure recovery includes a procedure of beam failure detection, new beam discovery, and beam recovery.

### 3. Beam adjustment

Once an initial beam pair is established, there is a need to regularly re-evaluate the selection of transmitter-side and receiver-side beam directions due to movement and rotation of a mobile device. Furthermore, even for stationary devices, movement of other objects in the environment may block or unblock different beam pairs, implying a possible need to re-evaluate the selected beam directions. The beam adjustment may further include refining a beam shape, for example, making a beam narrower compared to a wider beam used for initial beam establishment. In the general case, beamforming is about beam pairs including transmit-end beamforming and receive-end beamforming. Therefore, beam adjustment can be divided into two separate procedures: re-evaluation and possible adjustment of the transmitter-side beam direction given the current receiver-side beam direction; and re-evaluation and possible adjustment of the receiver-side beam direction given the current transmitter-side beam direction.

As described above, in the general case, beamforming, including beam adjustment, needs to be performed for both downlink and uplink transmission directions. However, depending on to what extent beam correspondence can be assumed, explicit beam adjustment only needs to be performed in one of the directions, for example, in the downlink direction. It can then be assumed that an adjusted downlink beam pair is appropriate also for the opposite transmission direction.

Beam adjustment may include downlink transmit-end beam adjustment, downlink receive-end beam adjustment, and uplink beam adjustment.

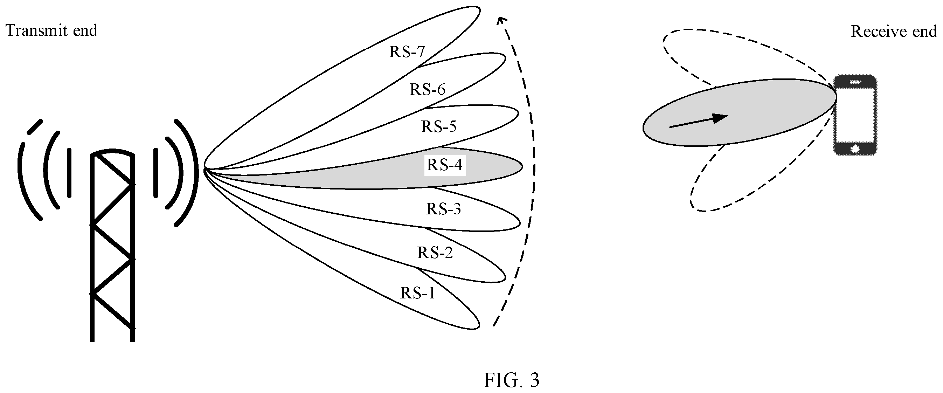

For downlink transmit-end beam adjustment, downlink transmitter-side beam adjustment aims at refining a network transmit beam, given a receiver beam currently used at a device side. To enable this, a device may measure a set of reference signals corresponding to different downlink beams. FIG. 3 is a diagram of downlink transmit-end beam adjustment according to an embodiment of this application. As shown in FIG. 3, assuming analog beamforming, transmissions on different downlink beams need to be performed in sequence, that is, beam scanning is performed. A measurement result is then reported to a network, and the network may determine, based on the report, to adjust a current beam. It should be noted that this adjustment does not necessarily imply the selection of one of beams that the device has measured. For example, the network may determine to use a direction of a beam between two reported beams for transmission. Additionally, during measurement for transmitter-side beam adjustment, a receiver beam of the device should be kept fixed in order for measurement to capture quality of different transmitter beams given a current receive beam. To implement measurement or reporting of a set of beams as outlined in FIG. 3, a reporting framework based on report configurations can be used. More specifically, measurement/reporting should be described by using a report configuration having an L1-RSRP as the quantity to be reported. A set of reference signals to be measured corresponding to the set of beams should be included in an NZP-CSI-RS resource set associated with the report configuration. Such a resource set may include a set of configured CSI-RSs or a set of SS blocks. Therefore, measurement for beam management may be performed on the CSI-RS or the SS block. In a case of L1-RSRP measurement based on the CSI-RS, the CSI-RS should be limited to a single-port or dual-port CSI-RS. In the latter case, the reported L1-RSRP should be a linear average value of L1-RSRPs measured on all ports. The device may report measurement results, which are actually up to four beams, corresponding to up to four reference signals (CSI-RSs or SS blocks) in a single report instance. Each such report may include: indications of the up to four reference signals, namely, the actual beams, to which the specific report relates; a measured L1-RSRP of the strongest beam; and for the remaining up to three beams, differences between measured L1-RSRPs and the measured L1-RSRP of the best beam.

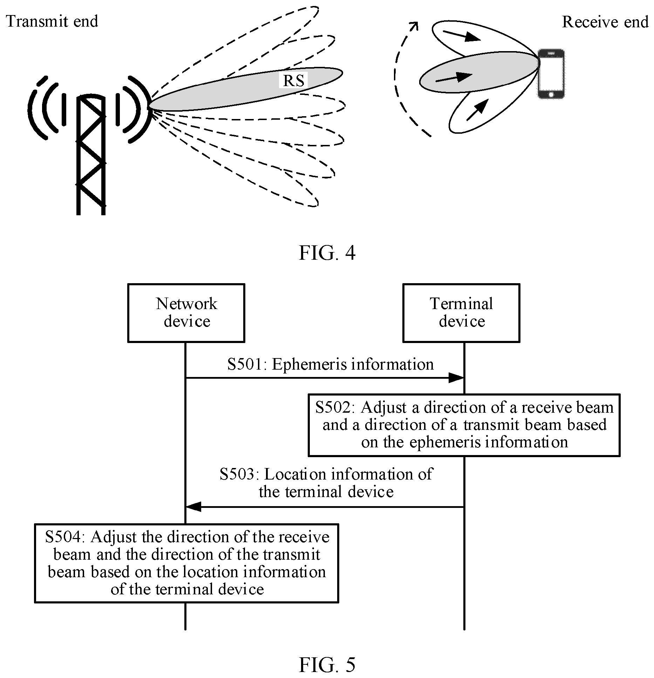

For downlink receive-end beam adjustment, receiver-side beam adjustment aims at finding the best receive beam, given a current transmit beam. To enable this, the device should once again be configured with a set of downlink reference signals that, in this case, are transmitted within a same network-side beam (current serving beam). FIG. 4 is a diagram of downlink receive-end beam adjustment according to an embodiment of this application. As shown in FIG. 4, the device may then perform receiver-side beam scanning to measure the configured reference signals in sequence on a set of receiver beams. Based on the measurement, the device may adjust a current receiver beam. Downlink receiver-side beam adjustment may be based on a similar report configuration as for transmitter-side beam adjustment. However, as receiver-side beam adjustment is completed inside the device, there is no report quantity associated with receiver-side beam adjustment. To allow for analog beamforming at a receiver end, different reference signals in a resource set should be transmitted in different symbols, thereby allowing for a beam at the receiver end to sweep over the set of reference signals. In addition, the device should be allowed to assume that the different reference signals in the resource set are transmitted using a same spatial filter, in practice, a same transmission beam. In general, the configured resource set includes a "repetition" flag that indicates whether the device can assume that all reference signals in the resource set are transmitted using the same spatial filter. For a resource set to be used for downlink receiver-side beam adjustment, the repetition flag should be set.

Uplink beam adjustment serves the same purpose as downlink beam adjustment, that is, to retain an appropriate beam pair, which, in the case of uplink beam adjustment, implies an appropriate transmit beam at a device side and a corresponding appropriate receive beam at a network side. As described above, if a beam correspondence can be assumed and if an appropriate downlink beam pair has been established and retained, explicit uplink beam management is not required. Instead, an appropriate beam pair for a downlink transmission direction can be assumed to be appropriate also for an uplink direction. It should be noted that, the reverse is also true, to be specific, if an appropriate beam pair is established and retained for the uplink direction, the same beam pair may also be used in the downlink direction without the need for explicit downlink beam management. If explicit uplink beam adjustment is required, it can be performed in essentially the same manner as for downlink beam adjustment, with a main difference being that measurement is performed by the network based on a configured SRS rather than the CSI-RS or the SS block.

### 4. Beam indication and TCI

Downlink beamforming may be done transparent to a device, in other words, the device does not need to know a specific beam that a transmitter uses. However, NR also supports beam indication. In practice, this implies notifying the device that transmission of a specific PDSCH and/or PDCCH uses a same transmission beam as a configured reference signal (CSI-RS or SS block). More formally, it implies notifying the device that a specific PDSCH and/or PDCCH are/is transmitted using the same spatial filter as the configured reference signal.

Specifically, beam indication is based on a configuration and downlink signaling of a transmission configuration indicator (TCI) state. Each TCI state includes information about a reference signal (a CSI-RS or an SS block), or the like. By associating transmission of a specific downlink (PDCCH or PDSCH) with a specific TCI, a network notifies the device that the device can assume that downlink transmission is completed using a same spatial filter as a reference signal associated with the TCI. One device can be configured with up to 64 candidate TCI states. For beam indication for the PDCCH, a subset of M configured candidate states is assigned to each configured CORESET by using RRC signaling. By using MAC signaling, the network can more dynamically indicate that a specific TCI state in the configured subset assigned to each CORESET is valid. When monitoring the PDCCH in a specific CORESET, the device can assume that the PDCCH is transmitted using a same spatial filter as a reference signal associated with a TCI indicated by the MAC. In other words, if the device has earlier determined an appropriate receiver-side beam direction for receiving the reference signal, the device can assume that the same beam direction is appropriate for receiving the PDCCH. For PDSCH beam indication, there are two alternatives depending on a scheduling offset, that is, depending on transmission timing of the PDSCH relative to a corresponding PDCCH carrying scheduling information for the PDSCH. If the scheduling offset is greater than N symbols, DCI for scheduling assignment may explicitly indicate a TCI state for PDSCH transmission. To enable this, the device is first configured with a set of up to eight TCI states (from originally configured states) as a set of candidate TCI states. A three-bit indicator in the DCI then indicates an exact TCI state that is valid for scheduled PDSCH transmission. If the scheduling offset is less than or equal to N symbols, the device should instead assume that PDSCH transmission has QCL with corresponding PDCCH transmission. In other words, a TCI state for a PDCCH state indicated by the MAC signaling should be assumed to be valid also for corresponding scheduled PDSCH transmission. The reason for limiting DCI signaling-based fully dynamic TCI selection to a situation in which the scheduling offset is greater than a specific value is simply as follows: For a small scheduling offset, there will not be sufficient time for the device to decode TCI information in the DCI within the scheduling offset and adjust a receiver beam accordingly before receiving the PDSCH.

Currently, for an NR system, beam indication may be performed based on a TCI. Specifically, there is a QCL configuration for each of a high frequency and a low frequency, a source reference signal is an SSB or a CSI-RS, and a target reference signal/channel is a CSI-RS, a DMRS of a PDCCH, or a DMRS of a PDSCH. There are four QCL types: typeA, typeB, typeC, and typeD, and channel characteristics specifically represented by the types are shown in Table 1 below.

**Table 1 QCL relationship in an NR system**

| QCL type | Description (description) |
|---|---|
| QCL-typeA | Doppler frequency shift, Doppler spread, average delay, and delay spread |
| QCL-typeB | Doppler frequency shift and Doppler spread |
| QCL-typeC | Average delay and Doppler frequency shift |
| QCL-typeD | Spatial Rx parameter |

When performing beam indication, a network device may configure a TCI state (TCI state) to indicate a QCL relationship with a reference signal, and use the typeD to indicate a spatial filter. A terminal device receives a beam direction, and trains a receive (Rx) beam of the reference signal based on measurement of the reference signal. In this way, when receiving data of a target reference signal/channel, the terminal device may adjust a direction of the receive beam based on the QCL relationship with the reference signal.

However, the following problems may exist when the QCL typeD is used for beam indication in an NTN communication system.
1. If a source signal of the QCL is a periodic signal, a problem of a long periodicity (SSB: 5 ms to 160 ms; CSI-RS: 4 slots to 640 slots) exists. As a satellite moves at a high speed, there is a problem that a receive beam based on the source signal expires, especially for a very small aperture terminal (very small aperture terminal, VSAT) with an extremely narrow beam, which may have a half power beam width (half power beam width, HPBW) of about 1 degree.
2. As a satellite moves dynamically, frequent indication of a beam direction by using a TCI requires frequent TCI updates (especially in an earth-moving scenario), causing high signaling overheads.

Therefore, how to reduce overheads for a beam direction in the NTN communication system is an urgent problem to be resolved.

Embodiments of this application provide a communication method, to implement highly simplified NTN beam management. NTN beam management is reconstructed based on location assistance information such as ephemeris information and GNSS information, so that frequent indication of a beam direction by using a TCI can be avoided, thereby reducing signaling overheads. The following separately provides descriptions by using the following embodiments. In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The following describes the communication method provided in embodiments of this application. It may be understood that, in this application, an example in which a network device and a terminal device serve as execution bodies of an interaction example is used for description. However, the execution body of the interaction example is not limited in this application. For example, a method performed by the network device in this application may alternatively be performed by a module (for example, a chip, a chip system, or a processor) used in the network device, or may be implemented by a logical node, a logical module, or software that can implement all or some functions of the network device; and a method performed by the terminal device in this application may alternatively be performed by a module (for example, a chip, a chip system, or a processor) used in the terminal device, or may be implemented by a logical node, a logical module, or software that can implement all or some functions of the terminal device. The network device may be a satellite. The satellite may be a geostationary satellite, a non-geostationary satellite, an artificial satellite, a low earth orbit satellite, a medium earth orbit satellite, a high earth orbit satellite, or the like. This is not specifically limited in embodiment of this application.

FIG. 5 is a diagram of interaction of a communication method according to an embodiment of this application. As shown in FIG. 5, the communication method may include at least the following steps.

S501: A terminal device obtains ephemeris information from a network device.

The ephemeris (ephemeris) information may be understood as accurate orbital data of the network device (satellite).

In a possible implementation, the ephemeris information may be obtained by using TCI state information. Specifically, the network device may send the TCI state information to the terminal device, where the TCI state information includes the ephemeris information. The ephemeris information may be ephemeris information of a cell currently serving the terminal device (serving cell) or a serving transmitting and receiving point (transmitting and receiving point, TRP), or the ephemeris information is ephemeris information of a target cell. It may be understood that, if the ephemeris information is the ephemeris information of the cell currently serving the terminal device, the terminal device may perform intra-satellite beam switching based on the ephemeris information; or if the ephemeris information is the ephemeris information of the target cell, the terminal device may perform inter-satellite beam switching based on the ephemeris information, and during inter-satellite beam switching, the terminal device may obtain a direction of a receive beam in advance.

The TCI state information may be carried in RRC, MAC CE, or DCI.

S502: The terminal device adjusts the direction of the receive beam and a direction of a transmit beam based on the ephemeris information.

After obtaining the ephemeris information from the network device, the terminal device may adjust the direction of the receive beam and the direction of the transmit beam based on the ephemeris information.

In a possible implementation, if the ephemeris information is added to the TCI state information, the network device may also configure a QCL typeD in the TCI state information. When receiving the TCI state information, the terminal device may be unable to determine an indication used to adjust the receive beam. For a problem of a conflict between the QCL typeD and the ephemeris, the following processing manners may be used:
If the TCI state information includes the ephemeris information and no QCL typeD is configured, the direction of the receive beam is determined based on the ephemeris information.

If the TCI state information includes the ephemeris information and the QCL typeD is configured, the direction of the receive beam is determined based on an indication of the QCL typeD.

The ephemeris information is added to the TCI state information, so that the terminal device can be indicated to obtain a beam in advance during intra-satellite beam switching and inter-satellite switching, to resolve a problem of high signaling overheads caused by frequent TCI updates.

S503: The network device obtains location information of the terminal device from the terminal device.

The network device may send the location information of the terminal device to the terminal device, where the location information includes GNSS information or beam position information.

S504: The network device adjusts the direction of the receive beam and the direction of the transmit beam based on the location information of the terminal device.

After obtaining the location information of the terminal device from the terminal device, the network device may adjust the direction of the receive beam and the direction of the transmit beam based on the location information of the terminal device.

A beam pair between the network device and the terminal device may be maintained by default. To be specific, the network device may determine the direction of the transmit/receive beam based on the location information of the terminal device, and the terminal device may adjust the direction of the receive/transmit beam based on the obtained ephemeris information.

Further, the terminal device may dominate a beam measurement mechanism. Beam alignment may be inaccurate on a terminal device side, especially for a VSAT terminal device, and a beam correction mechanism is required. For an NTN system, the network device moves at a high speed, and the terminal device needs to complete beam training within specific time. In addition, because beam widths of terminal devices are different, quantities of beams that need to be trained and completion time are different.

Beam measurement of the terminal device may be triggered in the following two implementations:

In a possible implementation, the terminal device may obtain an RSRP threshold; and measure the receive beam when an RSRP of the terminal device is less than the RSRP threshold.

In a possible implementation, the terminal device may obtain an RSRP threshold and a preset duration (for example, the terminal device maintains a timer); and measure the receive beam when the RSRP of the terminal device remains below the RSRP threshold for the preset duration.

Further, the terminal device may further dominate a quantity of beams to be trained and training time. Specifically, the terminal device may send request information to the network device, where the request information is used to request receive beam training, and the request information includes a time period requested for training, or the request information includes a time period requested for training and a quantity of beams requested for training. After receiving the request information, the network device may configure a reference signal resource for the terminal device based on the time period requested for training in the request information, or based on the time period requested for training and the quantity of beams requested for training that are in the request information, and the terminal device performs beam training based on the reference signal resource. A reference signal may be a CSR-RS signal. The reference signal resource may be notified by the network device to the terminal device by using signaling such as RRC, a MAC CE, or DCI.

It may be understood that various numbers in this embodiment of this application are merely used for differentiation for ease of description, and are not used to limit the scope of this embodiment of this application. Sequence numbers of the foregoing processes do not mean an execution sequence. For example, an execution sequence of step S501 and step S503 may not be limited, step S503 may alternatively be performed before step S501, or step S503 and step S501 may be performed simultaneously. The execution sequence of the processes should be determined based on functions and internal logic of the processes.

Generally, a system needs to configure a periodic signal for beam measurement, reporting, and adjustment. This embodiment of this application provides highly simplified NTN beam management. NTN beam management is reconstructed based on location assistance information such as the ephemeris information and the GNSS information or the beam position information. In other words, in this embodiment, location assistance information-based beam management is used, so that frequent indication of a beam direction by using a TCI can be avoided, thereby reducing signaling overheads. In addition, a simplified beam measurement triggering and requesting method is further provided, in which the beam measurement mechanism is dominated by the terminal device. Specifically, the terminal device may not perform periodic beam measurement or reporting, and requests beam training only when a channel condition is poor or the terminal device determines that receive beam training is required, to reduce beam measurement or reporting overheads.

In other words, the network device communicates with the terminal device by using a default beam. When a specific condition is met (to be specific, the RSRP of the terminal device is less than the RSRP threshold or the RSRP of the terminal device remains below the RSRP threshold for the preset duration), the terminal device triggers a beam training request, and the network device configures the reference signal resource based on the quantity of beams and training time that are requested by the terminal device, so that beam measurement or reporting overheads can be reduced.

Embodiments of this application provide a communication method, to implement highly simplified NTN beam management. A new QCL type (a first QCL type in embodiments of this application) is defined, and is applied to all signals/channels. The first QCL type indicates that a direction of a receive beam of a terminal device is adjusted based on ephemeris information, and NTN beam management is reconstructed, so that frequent indication of a beam direction by using a TCI can be avoided, thereby reducing signaling overheads.

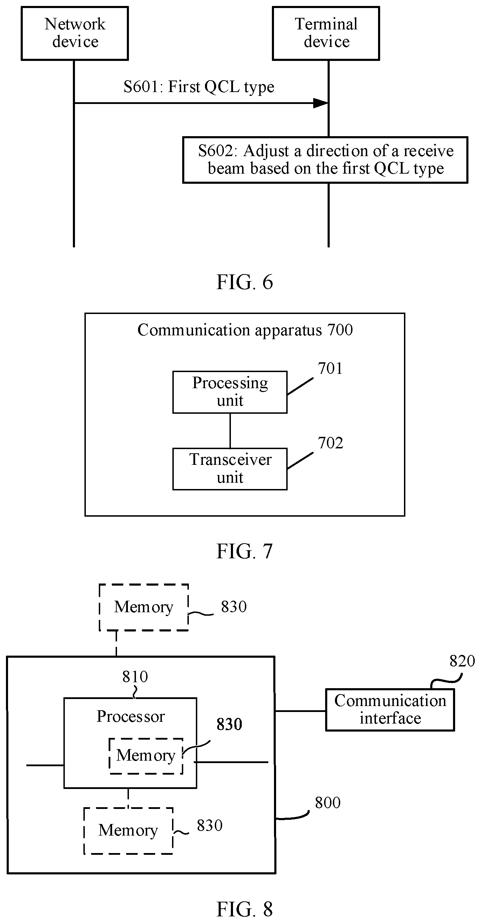

FIG. 6 is a diagram of interaction of another communication method according to an embodiment of this application. As shown in FIG. 6, the communication method may include at least the following steps.

S601: A network device sends a first QCL type to a terminal device. Correspondingly, the terminal device receives the first QCL type from the network device.

In this embodiment of this application, a new QCL type, that is, the first QCL type, may be defined, and may also be referred to as a QCL typeE. The QCL type may meet at least one of the following conditions:
There is no source reference signal;
when a common TCI configuration is used, once the first QCL type is configured, it implicitly indicates that the terminal device uses a same beam for downlink transmission (receiving of a downlink signal/channel) and uplink transmission (sending of an uplink signal/channel); and
it indicates that a direction of a receive beam and a direction of a transmit beam of the terminal device are adjusted based on ephemeris information.

S602: The terminal device adjusts the direction of the receive beam based on the first QCL type.

After receiving the first QCL type from the network device, the terminal device may adjust the direction of the receive beam based on the first QCL type.

For use of the first QCL type, there may be two manners: intra-satellite beam switching and inter-satellite beam switching.

For intra-satellite beam switching, the network device delivers the first QCL type, and the terminal device adjusts the direction of the receive beam based on ephemeris information of a cell (serving cell) in which the terminal device is currently located or a serving TRP.

For inter-satellite beam switching, the network device delivers the first QCL type, and delivers ephemeris information of a target satellite to the terminal device, and the terminal device may adjust the direction of the receive beam based on ephemeris information of a target cell or a target TRP.

In this embodiment of this application, the new QCL type (the first QCL type in this embodiment of this application) is defined, and the terminal device may adjust the direction of the receive beam based on the first QCL type and the ephemeris information, so that frequent indication of a beam direction by using a TCI can be avoided, thereby reducing signaling overheads.

It may be understood that, to implement the functions in the foregoing embodiments, the terminal device and the network device include corresponding hardware structures and/or software modules for performing the functions. Persons skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 7 and FIG. 8 each are a diagram of a possible structure of a communication apparatus according to an embodiment of this application. The communication apparatuses may be configured to implement functions of the terminal device or the network device in the foregoing method embodiments. Therefore, beneficial effects of the foregoing method embodiments can also be implemented. The communication apparatus may be a terminal device or a network device. The communication apparatus includes modules or units that are in one-to-one correspondence with the methods/operations/steps/actions performed by the terminal device or the network device in the foregoing method embodiments. The unit may be implemented by a hardware circuit, software, or a combination of a hardware circuit and software. In embodiments of this application, the communication apparatus may be one of the terminal devices 102 shown in FIG. 1, may be the network device 101 shown in FIG. 1, or may be a module (for example, a chip) used in the terminal device or the network device.

As shown in FIG. 7, the communication apparatus 700 may include a processing unit 701 and a transceiver unit 702. The communication apparatus 700 is configured to implement a function of the terminal device or the network device in the method embodiments shown in FIG. 5 and FIG. 6.

When the communication apparatus 700 is configured to implement the function of the terminal device in the method embodiment shown in FIG. 5:
the processing unit 701 is configured to obtain ephemeris information; and
the processing unit 701 is further configured to adjust a direction of a receive beam and a direction of a transmit beam based on the ephemeris information.

In a possible implementation, the processing unit 701 is further configured to: obtain an RSRP threshold; and measure the receive beam when an RSRP of the terminal device is less than the RSRP threshold.

In a possible implementation, the processing unit 701 is further configured to: obtain a preset duration; and measure the receive beam when the RSRP of the terminal device remains below the RSRP threshold for the preset duration.

In a possible implementation, the transceiver unit 702 is configured to send request information, where the request information is used to request receive beam training, and the request information includes a time period requested for training.

The transceiver unit 702 is further configured to: receive a reference signal resource configured by a network device; and perform beam training based on the reference signal resource.

In a possible implementation, the request information further includes a quantity of beams requested for training.

In a possible implementation, when obtaining the ephemeris information, the processing unit 701 is specifically configured to obtain TCI state information, where the TCI state information includes the ephemeris information.

In a possible implementation, if the TCI state information includes the ephemeris information and no quasi co-location QCL typeD is configured, the direction of the receive beam is determined based on the ephemeris information.

In a possible implementation, if the TCI state information includes the ephemeris information and a quasi co-location QCL typeD is configured, the direction of the receive beam is determined based on an indication of the QCL typeD.

In a possible implementation, the TCI state information is carried in RRC, MAC CE, or DCI.

In a possible implementation, the ephemeris information is ephemeris information of a cell currently serving the terminal device, or the ephemeris information is ephemeris information of a target cell.

In a possible implementation, the transceiver unit 702 is further configured to send location information of the terminal device, where the location information is used by the network device to adjust a beam direction, and the location information includes a GNSS or beam position information.

When the communication apparatus 700 is configured to implement the function of the terminal device in the method embodiment shown in FIG. 6:
the transceiver unit 702 is configured to receive a first QCL type, where the first QCL type meets at least one of the following conditions: there is no source reference signal; it indicates that the terminal device uses a same beam for downlink transmission and uplink transmission; and it indicates that a direction of a receive beam and a direction of a transmit beam of the terminal device are adjusted based on ephemeris information; and
the processing unit 701 is configured to adjust the direction of the receive beam based on the first QCL type.

In a possible implementation, the processing unit 701 is further configured to obtain the ephemeris information, where the ephemeris information is ephemeris information of a cell currently serving the terminal device, or the ephemeris information is ephemeris information of a target cell.

In a possible implementation, when receiving the first QCL type, the transceiver unit 702 is specifically configured to receive TCI state information, where the TCI state information includes the first QCL type.

In a possible implementation, the TCI state information further includes the ephemeris information.

In a possible implementation, the TCI state information is carried in RRC, MAC CE, or DCI.

When the communication apparatus 700 is configured to implement the function of the network device in the method embodiment shown in FIG. 5:
the processing unit 701 is configured to obtain location information of a terminal device, where the location information includes GNSS information or beam position information; and
the processing unit 701 is further configured to adjust a direction of a receive beam and a direction of a transmit beam based on the location information.

In a possible implementation, the transceiver unit 702 is configured to send an RSRP threshold, where the RSRP threshold is used by the terminal device to determine to measure the receive beam.

In a possible implementation, the transceiver unit 702 is further configured to send a preset duration, where the preset duration is used by the terminal device to determine to measure the receive beam.

In a possible implementation, the transceiver unit 702 is further configured to receive request information, where the request information is used to request receive beam training, and the request information includes a time period requested for training.

The transceiver unit 702 is further configured to configure a reference signal resource for the terminal device based on the request information.

In a possible implementation, the request information further includes a quantity of beams requested for training.

In a possible implementation, the transceiver unit 702 is further configured to send ephemeris information, where the ephemeris information is used by the terminal device to adjust the direction of the receive beam and the direction of the transmit beam.

In a possible implementation, the transceiver unit 702 is further configured to send TCI state information, where the TCI state information includes the ephemeris information.

In a possible implementation, the reference signal resource is carried in RRC, MAC CE, or DCI; and/or the TCI state information is carried in RRC, MAC CE, or DCI.

In a possible implementation, the ephemeris information is ephemeris information of a cell currently serving the terminal device, or the ephemeris information is ephemeris information of a target cell.

When the communication apparatus 700 is configured to implement the function of the network device in the method embodiment shown in FIG. 6:
the transceiver unit 702 is configured to send a first QCL type, where the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information.

In a possible implementation, the transceiver unit 702 is further configured to send the ephemeris information, where the ephemeris information is ephemeris information of a cell currently serving the terminal device, or the ephemeris information is ephemeris information of a target cell.

In a possible implementation, the transceiver unit 702 is further configured to send TCI state information, where the TCI state information includes the first QCL type.

In a possible implementation, the TCI state information further includes the ephemeris information.

In a possible implementation, the TCI state information is carried in RRC, MAC CE, or DCI.

For more detailed descriptions of the processing unit 701 and the transceiver unit 702, refer to related descriptions in the method embodiments shown in FIG. 5 and FIG. 6.

As shown in FIG. 8, a communication apparatus 800 is provided, and is configured to implement a function of the foregoing terminal device or network device. The apparatus may be a communication device or an apparatus used in the communication device, and the communication device may be the terminal device or the network device. The apparatus used in the communication device may be a chip system or a chip in the communication device. The chip system may include a chip, or may include a chip and another discrete component.

The communication apparatus 800 includes at least one processor 810, configured to implement a processing function of a device (for example, the network device or the terminal device) in the methods provided in embodiments of this application. The communication apparatus 800 may further include a communication interface 820, configured to implement receiving and sending operations of the device (for example, the network device or the terminal device) in the methods provided in embodiments of this application. In embodiments of this application, the communication interface may be a transceiver, a circuit, a bus, a module, or another type of communication interface, and is configured to communicate with another device through a transmission medium. For example, the communication interface 820 is used by an apparatus in the communication apparatus 800 to communicate with another device. The processor 810 receives and sends data through the communication interface 820, and is configured to implement the methods in the foregoing method embodiments.

The communication apparatus 800 may further include at least one memory 830, configured to store program instructions and/or data. The memory 830 is coupled to the processor 810. The coupling in embodiments of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

A specific connection medium between the communication interface 820, the processor 810, and the memory 830 is not limited in embodiments of this application. In embodiments of this application, in FIG. 8, the memory 830, the processor 810, and the communication interface 820 are connected through a bus. The bus is represented by using a thick line in FIG. 8. A manner of a connection between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

When the communication apparatus 800 is specifically the apparatus used in the device (for example, the network device or the terminal device), for example, when the communication apparatus 800 is specifically the chip or the chip system, the communication interface 820 may output or receive a baseband signal. When the communication apparatus 800 is specifically the device (for example, the network device or the terminal device), the communication interface 820 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

It should be noted that the communication interface 820 may be configured to perform a function of the transceiver unit 702, and the processor 810 may be configured to perform a function of the processing unit 701. Details are not described herein again.

When the communication apparatus is a chip used in a terminal device, the chip in the terminal device implements functions of the terminal device in the foregoing method embodiments. The chip in the terminal device receives information from another network element; or the chip in the terminal device sends information to another network element.

When the communication apparatus is a chip used in a network device, the chip in the network device implements functions of the network device in the foregoing method embodiments. The chip in the network device receives information from another network element; or the chip in the network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist in the terminal device or the network device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, or other programmable apparatuses. The computer program or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device or the network device in the foregoing method embodiments is implemented.

An embodiment of this application further provides a computer program product. The computer program product includes a computer program. When the computer program is executed, the method performed by the terminal device or the network device in the foregoing method embodiments is implemented.

An embodiment of this application further provides a communication system. The communication system includes a terminal device or a network device. The terminal device is configured to perform the method performed by the terminal device in the foregoing method embodiments. The network device is configured to perform the method performed by the network device in the foregoing method embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that all embodiments described in this specification are example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease and brevity of description, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, comprising:
obtaining ephemeris information; and
adjusting a direction of a receive beam and a direction of a transmit beam based on the ephemeris information.

2. The method according to claim 1, wherein the method further comprises:
obtaining a reference signal received power RSRP threshold; and
measuring the receive beam when an RSRP of a terminal device is less than the RSRP threshold.

3. The method according to claim 2, wherein the method further comprises:
obtaining a preset duration; and
measuring the receive beam when the RSRP of the terminal device remains below the RSRP threshold for the preset duration.

4. The method according to any one of claims 1 to 3, wherein the method further comprises:
sending request information, wherein the request information is used to request receive beam training, and the request information comprises a time period requested for training;
receiving a reference signal resource configured by a network device; and
performing beam training based on the reference signal resource.

5. The method according to claim 4, wherein the request information further comprises a quantity of beams requested for training.

6. The method according to any one of claims 1 to 5, wherein the obtaining the ephemeris information comprises:
obtaining transmission configuration indicator TCI state information, wherein the TCI state information comprises the ephemeris information.

7. The method according to claim 6, wherein if the TCI state information comprises the ephemeris information and no quasi co-location QCL typeD is configured, the direction of the receive beam is determined based on the ephemeris information.

8. The method according to claim 6, wherein if the TCI state information comprises the ephemeris information and a quasi co-location QCL typeD is configured, the direction of the receive beam is determined based on an indication of the QCL typeD.

9. The method according to any one of claims 6 to 8, wherein the TCI state information is carried in radio resource control RRC signaling, medium access control control element MAC CE, or downlink control information DCI.

10. The method according to any one of claims 1 to 9, wherein the ephemeris information is ephemeris information of a cell currently serving the terminal device, or the ephemeris information is ephemeris information of a target cell.

11. The method according to any one of claims 1 to 10, wherein the method further comprises:
sending location information of the terminal device, wherein the location information is used by the network device to adjust a beam direction, and the location information comprises global navigation satellite system GNSS information or beam position information.

12. A communication method, comprising:
obtaining location information of a terminal device, wherein the location information comprises global navigation satellite system GNSS information or beam position information; and
adjusting a direction of a receive beam and a direction of a transmit beam based on the location information.

13. The method according to claim 12, wherein the method further comprises:
sending a reference signal received power RSRP threshold, wherein the RSRP threshold is used by the terminal device to determine to measure the receive beam.

14. The method according to claim 13, wherein the method further comprises:
sending a preset duration, wherein the preset duration is used by the terminal device to determine to measure the receive beam.

15. The method according to any one of claims 12 to 14, wherein the method further comprises:
receiving request information, wherein the request information is used to request receive beam training, and the request information comprises a time period requested for training; and
configuring a reference signal resource for the terminal device based on the request information.

16. The method according to claim 15, wherein the request information further comprises a quantity of beams requested for training.

17. The method according to any one of claims 12 to 16, wherein the method further comprises:
sending ephemeris information, wherein the ephemeris information is used by the terminal device to adjust the direction of the receive beam and the direction of the transmit beam.

18. The method according to claim 17, wherein the sending the ephemeris information comprises:
sending transmission configuration indicator TCI state information, wherein the TCI state information comprises the ephemeris information.

19. The method according to claim 15 or 18, wherein the reference signal resource is carried in radio resource control RRC signaling, medium access control control element MAC CE, or downlink control information DCI; and/or
the TCI state information is carried in RRC signaling, MAC CE, or DCI.

20. The method according to any one of claims 11 to 19, wherein the ephemeris information is ephemeris information of a cell currently serving the terminal device, or the ephemeris information is ephemeris information of a target cell.

21. A communication method, comprising:
receiving a first quasi co-location QCL type, wherein the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information; and
adjusting the direction of the receive beam based on the first QCL type.

22. The method according to claim 21, wherein the method further comprises:
obtaining the ephemeris information, wherein the ephemeris information is ephemeris information of a cell currently serving the terminal device, or the ephemeris information is ephemeris information of a target cell.

23. The method according to claim 21 or 22, wherein the receiving the first QCL type comprises:
receiving transmission configuration indicator TCI state information, wherein the TCI state information comprises the first QCL type.

24. The method according to claim 23, wherein the TCI state information further comprises the ephemeris information.

25. The method according to claim 23 or 24, wherein the TCI state information is carried in radio resource control RRC signaling, medium access control control element MAC CE, or downlink control information DCI.

26. A communication method, comprising:
sending a first quasi co-location QCL type, wherein the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information.

27. The method according to claim 26, wherein the method further comprises:
sending the ephemeris information, wherein the ephemeris information is ephemeris information of a cell currently serving the terminal device, or the ephemeris information is ephemeris information of a target cell.

28. The method according to claim 26 or 27, wherein the sending the first QCL type comprises:
sending transmission configuration indicator TCI state information, wherein the TCI state information comprises the first QCL type.

29. The method according to claim 28, wherein the TCI state information further comprises the ephemeris information.

30. The method according to claim 28 or 29, wherein the TCI state information is carried in radio resource control RRC signaling, medium access control control element MAC CE, or downlink control information DCI.

31. A communication apparatus, comprising:
a processing unit, configured to obtain ephemeris information, wherein
the processing unit is further configured to adjust a direction of a receive beam and a direction of a transmit beam based on the ephemeris information.

32. The apparatus according to claim 31, wherein the processing unit is further configured to:
obtain a reference signal received power RSRP threshold; and
measure the receive beam when an RSRP of a terminal device is less than the RSRP threshold.

33. The apparatus according to claim 32, wherein the processing unit is further configured to:
obtain a preset duration; and
measure the receive beam when the RSRP of the terminal device remains below the RSRP threshold for the preset duration.

34. The apparatus according to any one of claims 31 to 33, wherein the apparatus further comprises:
a transceiver unit, configured to send request information, wherein the request information is used to request receive beam training, and the request information comprises a time period requested for training, wherein
the transceiver unit is further configured to receive a reference signal resource configured by a network device; and
the processing unit is further configured to perform beam training based on the reference signal resource.

35. The apparatus according to claim 34, wherein the request information further comprises a quantity of beams requested for training.

36. The apparatus according to any one of claims 31 to 35, wherein when obtaining the ephemeris information, the processing unit is specifically configured to:
obtain transmission configuration indicator TCI state information, wherein the TCI state information comprises the ephemeris information.

37. The apparatus according to claim 36, wherein if the TCI state information comprises the ephemeris information and no quasi co-location QCL typeD is configured, the direction of the receive beam is determined based on the ephemeris information.

38. The apparatus according to claim 36, wherein if the TCI state information comprises the ephemeris information and a quasi co-location QCL typeD is configured, the direction of the receive beam is determined based on an indication of the QCL typeD.

39. The apparatus according to any one of claims 36 to 38, wherein the TCI state information is carried in radio resource control RRC signaling, medium access control control element MAC CE, or downlink control information DCI.

40. The apparatus according to any one of claims 31 to 39, wherein the ephemeris information is ephemeris information of a cell currently serving the terminal device, or the ephemeris information is ephemeris information of a target cell.

41. The apparatus according to any one of claims 31 to 40, wherein the transceiver unit is further configured to send location information of the terminal device, wherein the location information is used by the network device to adjust a beam direction, and the location information comprises global navigation satellite system GNSS information or beam position information.

42. A communication apparatus, comprising:
a processing unit, configured to obtain location information of a terminal device, wherein the location information comprises global navigation satellite system GNSS information or beam position information, wherein
the processing unit is further configured to adjust a direction of a receive beam and a direction of a transmit beam based on the location information.

43. The apparatus according to claim 42, wherein the apparatus further comprises:
a transceiver unit, configured to send a reference signal received power RSRP threshold, wherein the RSRP threshold is used by the terminal device to determine to measure the receive beam.

44. The apparatus according to claim 43, wherein the transceiver unit is further configured to send a preset duration, wherein the preset duration is used by the terminal device to determine to measure the receive beam.

45. The apparatus according to any one of claims 42 to 44, wherein the transceiver unit is further configured to receive request information, wherein the request information is used to request receive beam training, and the request information comprises a time period requested for training; and
the processing unit is further configured to configure a reference signal resource for the terminal device based on the request information.

46. The apparatus according to claim 45, wherein the request information further comprises a quantity of beams requested for training.

47. The apparatus according to any one of claims 42 to 46, wherein the transceiver unit is further configured to send ephemeris information, wherein the ephemeris information is used by the terminal device to adjust the direction of the receive beam and the direction of the transmit beam.

48. The apparatus according to claim 47, wherein when sending the ephemeris information, the transceiver unit is specifically configured to:
send transmission configuration indicator TCI state information, wherein the TCI state information comprises the ephemeris information.

49. The apparatus according to claim 45 or 48, wherein the reference signal resource is carried in radio resource control RRC signaling, medium access control control element MAC CE, or downlink control information DCI; and/or
the TCI state information is carried in RRC signaling, MAC CE, or DCI.

50. The apparatus according to any one of claims 41 to 49, wherein the ephemeris information is ephemeris information of a cell currently serving the terminal device, or the ephemeris information is ephemeris information of a target cell.

51. A communication apparatus, comprising:
a transceiver unit, configured to receive a first quasi co-location QCL type, wherein the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information; and
a processing unit, configured to adjust the direction of the receive beam based on the first QCL type.

52. The apparatus according to claim 51, wherein the processing unit is further configured to obtain the ephemeris information, wherein the ephemeris information is ephemeris information of a cell currently serving the terminal device, or the ephemeris information is ephemeris information of a target cell.

53. The apparatus according to claim 51 or 52, wherein when receiving the first QCL type, the transceiver unit is specifically configured to:
receive transmission configuration indicator TCI state information, wherein the TCI state information comprises the first QCL type.

54. The apparatus according to claim 53, wherein the TCI state information further comprises the ephemeris information.

55. The apparatus according to claim 53 or 54, wherein the TCI state information is carried in radio resource control RRC signaling, medium access control control element MAC CE, or downlink control information DCI.

56. A communication apparatus, comprising:
a transceiver unit, configured to send a first quasi co-location QCL type, wherein the first QCL type meets at least one of the following conditions: there is no source reference signal; it indicates that a terminal device uses a same beam for downlink transmission and uplink transmission; and it indicates that a direction of a receive beam and a direction of a transmit beam of the terminal device are adjusted based on ephemeris information.

57. The apparatus according to claim 56, wherein the transceiver unit is further configured to send the ephemeris information, wherein the ephemeris information is ephemeris information of a cell currently serving the terminal device, or the ephemeris information is ephemeris information of a target cell.

58. The apparatus according to claim 56 or 57, wherein when sending the first QCL type, the transceiver unit is specifically configured to:
send transmission configuration indicator TCI state information, wherein the TCI state information comprises the first QCL type.

59. The apparatus according to claim 58, wherein the TCI state information further comprises the ephemeris information.

60. The apparatus according to claim 58 or 59, wherein the TCI state information is carried in radio resource control RRC signaling, medium access control control element MAC CE, or downlink control information DCI.

61. A communication apparatus, comprising a processor, wherein the processor is coupled to a memory, the memory is configured to store a program or instructions, and when the program or the instructions are executed by the processor, the apparatus is caused to perform the method according to any one of claims 1 to 30.

62. A computer-readable storage medium, wherein the storage medium stores a computer program or instructions, and when the computer program or the instructions are executed, the method according to any one of claims 1 to 30 is implemented.

63. A computer program product, comprising computer program code, wherein when the computer program code is run, the method according to any one of claims 1 to 30 is implemented.
